# EUROPEAN PATENT SPECIFICATION

(11) **EP 2 829 588 B1**
(45) Date of publication and mention of the grant of the patent: **15.03.2017**
(21) Application number: 14182084.5
(22) Date of filing: 28.05.2012
(51) Int. Cl.: C10L 5/44, C10B 53/02, C10L 5/36, C10B 49/10, C10B 57/10, F01K 13/00

(54) **Method for producing bio-coke**
Verfahren zur Herstellung von Biokoks
Procédé de production de biocharbon

(30) Priority: 27.05.2011 FI 20110180; 25.05.2012 WO PCT/FI2012/050505
(43) Date of publication of application: 28.01.2015
(62) Divisional of application: 12731511.7
(73) Proprietor: Outotec (Finland) Oy, 02230 Espoo (FI)
(72) Inventor: Metsärinta, Maija-Leena, 28450 Vanha-Ulvila (FI)
(74) Representative: Kolster Oy Ab

(56) References cited:
- EP-A1- 2 025 738
- CA-A1- 1 054 088
- US-A1- 2010 251 616
- US-B1- 6 808 390

## Description

### FIELD OF THE INVENTION

The invention relates to a method for the continuous production of bio-coke suitable for use in metallurgical industry by a method where the purpose is to obtain bio-coke with a desired lump size, sufficient strength uniform in every direction, low ash content, low volatiles content as well as low phosphorus and sulphur content, and low electrical conductivity, by using raw materials that enable economic production of bio-coke.

### BACKGROUND OF THE INVENTION

In recent decades the coke used in metallurgical industry has been manufactured mostly from fossil carbon. Nowadays, measures to combat climate change also have to be taken into account more emphatically in metallurgical processes and in the selection of materials used in them. Therefore biomass-based coke will make a viable alternative to fossil carbon in the future and, in addition, it may also allow participation in carbon dioxide emissions trading.

The production of bio-coke from the same raw materials as those used by the sawmill and pulp industries weakens its economy. Cheaper biomass materials are currently used for energy production. These materials include low-grade timber, crown mass, stumps, large decayed/defective wood, waste wood from construction, peat, straw, reed canary grass, surplus grain etc. A common problem with these materials is that their ash and impurity contents are higher than those of pure wood.

For instance, a considerable proportion of the wood in an entire tree is contained in its stump. The stump of a spruce, for example, may contain as much as about 30% of the stemwood volume of the tree. On the other hand, spruce stumps are loosely attached to the ground and there are 600 to 940 spruce stumps per logging area hectare. It is sufficient to maintain the land's growing power if 5 to 10 % of the stumps are left in the forest.

Charcoal or wood coke, which is a certain kind of bio-coke, has been manufactured in batch fashion for thousands of years. Batch carbonization has been carried out for example in different kinds of pits, retorts or wagon retorts. Continuous carbonization is carried out for instance in a horizontal or vertical retort, drum kiln or fluidized bed reactor.

Continuous carbonization processes taking place in a vertical shaft kiln (a retort) are represented by the Lambiotte and Lurgi processes. The wood material of a fairly large unit size, e.g. 200 to 400 mm, is fed into the kiln from the top and travels through the drying, carbonizing and cooling steps in the kiln. The gases are conveyed upwards from below. The steps may be separated from each other by a gas-lock.
US 2010/251616 A1 discloses a method and apparatus for the conversion of the biomass into a clean burning-useful fuel. According to the method the torrefied wood pellets will undergo a high temperature pyrolysis at 800°F (about 426°C) or higher and be essentially gasified. The produced gas could be used in heating boilers and electric energy producing power plants.
EP 2 025 738 A1 discloses a method for producing woodpellets from woodchips. In this method drying of the wood chips is carried out before the classification. The material which has passed through classification step is subjected sorting, in which the bark portions are optically sorted out. The wood pellets are crushed, conditioned, and pelleted.

The continuous coking of peat and wood in a drum kiln, where the lump size is a maximum of 50 mm, is described for example in CA application publication 1 054 088 (FI56549). The method is described in more detail as applied to the processing of eucalyptus wood, for example in the Master's thesis: Latva-Somppi, J.: Study of carbonization of eucalyptus, pages 25 - 28, Helsinki University of Technology 1989. First the wood is chipped and after this it is dried by means of the exhaust gases exiting a combustion chamber. The exhaust gases may be conveyed to a feed silo. The dried wood is screened, and fine material may be fed into the same combustion chamber in which the gas exiting coking is burned. When the moisture content of the wood has fallen to a value below 10%, it may be fed into the coking furnace. The coking furnace functions on the countercurrent principle, i.e. hot gases and wood material are fed into the furnace from opposite ends. The carbonization temperature is 500 to 900°C depending on the requirements set for the charcoal. The temperature required for carbonization is achieved by burning a part of the gases formed in carbonization, and additional heat is obtained with an auxiliary burner. The gases, tar and fly ash formed in carbonization are burned in the combustion chamber as is the waste wood generated in wood chipping. After combustion, the hot combustion gases are conveyed to a boiler, and water is fed into the piping thereof to produce pressurized steam and then electricity and district heat. The charcoal that is produced is cooled for example with water, after which the charcoal is classified. Fine carbon material can be briquetted or burned in the combustion chamber.

A continuous carbonization process has been developed for carbonizing sawdust and other wood waste in a fluidized bed furnace. Some of these methods are disclosed for example in US patent publications 3,977,947, 4,510,021 and 6,808,390. An inert bed, such as a bed of sand, is commonly used, but the first one of US publications mentions the use of previously carbonized material as the bed material. In most cases, wood is fed into the bed material, although it can also be fed from the upper section of the furnace. In each method described carbonization is carried out at a maximum temperature of 650 °C.

The cited publications mostly discuss the cheapest possible production of bio-coke from biomass, but they completely fail to take into account the strict quality criteria for bio-coke required in the fabrication of ferroalloys, for instance.

Metallurgical coke is subjected to both quality and cost requirements that may be addressed by selection of raw materials, process units and process conditions. Studies have shown that the compressive strength of wood coke is not a clear-cut matter; instead the compressive resistance along the grain is considerably higher than perpendicularly against the grain. The wood quality and carbonization temperature also affect strength. On the other hand, research has shown that ash and impurity components concentrate in the finer fraction of bio-coke. The volatile substances in bio-coke decrease as the carbonization temperature rises. The electrical conductivity and electrical resistance of the coke can also be adjusted using the carbonization temperature.

US 2010/0 251 616 A1 discloses a method for torrefaction of associated biomass.

EP 2 025 738 A1 discloses a method for preparing wood pellets from wood chops.

### OBJECT OF THE INVENTION

The object of the present invention is to disclose a method for a continuous production of bio-coke, which meets the quality criteria set by the metallurgical industry, particularly with regard to the fabrication of ferroalloys, and produces coke from low-cost raw materials by the method presented, taking the required characteristics of coal into account.

### SUMMARY OF THE INVENTION

The invention relates to a method for producing particle-like bio-coke for use in reduction occurring during an environment-friendly production of a ferroal-loys, whereby coke of sufficient strength, low ash, sulphur and phosphorus content and low volatiles content is produced continuously from biomass raw material, the method comprising the following steps:
a) lifting of tree stumps, dividing them into pieces, and shaking off impurities
b) storing and pre-drying them at the lifting site
c) storing, pre-drying, pre-cleaning and pre-comminuting them at the roadside
d) de-icing the crushed stumps, comminuting them to particle-like form
e) transporting the ground crushed stumps by vibrating conveyor screens to a storage silo
f) drying the crushed stumps
g) carbonizing the dried crushed stumps in a carbonization reactor, where a first part of the gases and dust formed in the carbonization of the biomass raw material is burned in the carbonization reactor with an air deficit
h) feeding a second part of the gases formed in the carbonization of the biomass raw material to a post-combustion boiler, where they are burned and the thermal energy that is generated is utilized to produce electricity and district heat and the cooled circulation gas is conveyed to the drying and carbonization of the particle-like biomass raw material
i) conveying the particle-like bio-coke formed in carbonization to cooling and conveying the cooling medium used either to the carbonization reactor or to the post-combustion boiler
j) screening the cooled particle-like bio-coke formed in the carbonization and conveying to briquetting, the first step of which is grinding
k) mixing the fine particle-like bio-coke with water and a binding agent, thus controlling the strength of the bio-coke
l) pressing the bio-coke mixture into briquettes
m) drying the briquettes.

The size of the particle-like pieces varies in this application and depends on the raw material and processes used. Typically in the beginning of the processing the size of the particle-like pieces may be between 0.2 to 1.5 m and later on in the process it can be from 0.1 to 50 mm.

The screening in j) removes the fine ash-rich fraction from the fraction conveyed to briquetting. This improves the quality of the final coke.

### LIST OF FIGURES

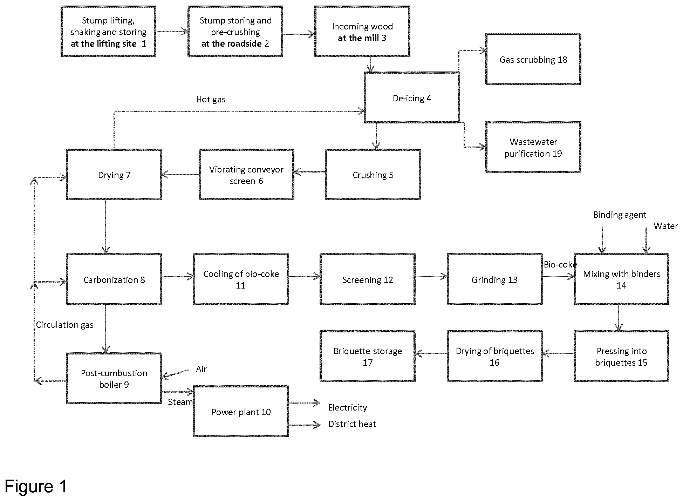

Figure 1 presents a flow chart of a bio-coke production method according to an example embodiment of the invention.

### DETAILED DESCRIPTION

The use of stump material for the production of bio-coke is not completely taken away from energy production, as part of the carbon contained in the stump material produces added value in carbonizing and in this case too energy comes from some of it.

Carbonization or pyrolysis or coking means the physical and chemical decomposition of an organic solid substance in an oxygen-free space under the effect of heat. It is the step preceding actual combustion or gasification, in which the volatile substances contained in the fuel are removed as a result of thermal decomposition forming water vapour, gas and tar components. A porous carbonized residue or coke is left behind. Carbon generated from wood is called charcoal.

Wood coke is one type of bio-coke. The material used for producing bio-coke is typically biomass or vegetal materials. These include various nutshells, waste generated in wood processing such as sawing waste, sawdust or bark. In addition, the trunks of the eucalyptus tree for example are used for production after the branches and leaves have been removed for the fabrication of eucalyptus oil.

The wood carbonization process can be divided into various steps. The first step is drying or the evaporation of water, which occurs at temperatures of 100 to 200°C. The decomposition of the wood is still minor at this stage. The decomposition of wood material starts in the second step, when mainly the oxygen-containing gases in the wood are released. This occurs at a higher temperature, i.e. around 200 to 280°C, when carbon dioxide and carbon monoxide, water and water-soluble substances such as acetic acid are released from the wood. The third step, which occurs at temperatures of 280 to 500°C, could be called a hydrocarbon step, and at this point the exothermic decomposition of the wood, i.e. the reaction, proceeds by itself and produces heat. As a result of the decomposition reactions, more acetic acid, methanol and tar are removed from the wood. The amount of gas generated is large compared to the earlier steps. The actual carbonization of the wood can be regarded as occurring at temperatures of around and above 500°C.

In practice the continuous carbonization process may be implemented at least in a retort, drum kiln and fluidized bed furnace.

When bio-coke is to be produced continuously for use in the metallurgical industry, such as in the reduction stage of ferroalloy production, the bio-coke must fulfil certain criteria. The C_{fix} content of the coke must be as high as possible, over 75%, the amount of volatiles below 1 %, the amount of alkali below 0.2%, the sulphur content below 0.07% and the phosphorus content below 0.03%. C_{fix} means fixed carbon, which is not removed along with the volatiles into the tar substances or gases, but becomes a carbonization residue, from which the ash portion has been removed. All the percentages mentioned in the text indicate percentages by weight. The coke should also be sufficiently strong when hot, so that it does not break up into dust when fed into a furnace. The electrical conductivity of the coke should be sufficiently low. The lump size of metallurgical coke should be in the region of 10 to 25 mm. Coarser coke cannot be used for example in the reduction of ferrochrome, because its electroconductivity is too high. For its part, finer coke causes the compression of the bed and as a result uneven gas distribution. The fabrication of coke with a high C_{fix} content and a low amount of volatiles requires a high carbonization temperature, i.e. it should be at least 700°C.

With low-cost biomass raw materials, there is a risk that the amount of ash and impurities may rise too high unless attention is paid to them in every process step. If the amount of impurities in bio-coke is to be minimized, this should be taken into account already at the growth and original treatment site of the renewable biomaterial. A precondition for the formation of high-quality bio-coke is that no foreign matter should be present in carbonization. For instance the bed of sand in the prior art fluidized bed furnace mentioned above causes an increase in the amount of harmful substances in the finished bio-coke product.

The batch production of coke requires the cooling and discharging of the kiln between every batch. Therefore continuous coke production eliminates expensive work stages, the energy economy is improved and the carbonization process is optimized.

The fabrication of bio-coke used in the reduction of ferroalloys from low-cost raw materials requires more work stages than conventional bio-coke production, which is why all secondary material generated during bio-coke production should be utilized to the fullest to allow overall process costs to be kept competitive. The advantage of bio-coke is that it is produced from renewable natural material, it maximizes quality and minimizes the use of energy, various emissions to air and water as well as the amount of waste generated.

An embodiment of the method according to the invention is illustrated by a flow chart in the attached Figure 1. For example, when tree stumps are used as raw material, the minimization of impurities can be taken into account already at the forest: the stumps are lifted from the ground at the logging area when it is unfrozen, during lifting the stumps are chopped into pieces, typically into two to four pieces and the soil is shaken off (1) so that the majority of the humus remains in the hole left by the stump. After this, the stumps may be stored in piles for a few weeks and in roadside storage for about a year, so that stones and sand come off the stumps more easily. The stumps are pre-comminuted, typically at the roadside, i.e. they are chipped/crushed using a crusher equipped with a screen (2). The particle size to which the stumps are comminuted depends on the process with which continuous carbonization will take place: retort, drum or fluidized bed. As a consequence, larger transportation loads are obtained than in the transport of whole stumps. The water content of the stump pieces decreases during storage and impurities are removed when they are handled dry.

The crushed pre-comminuted tree stumps to be processed are conveyed to the receiving area (3). In some cases the crushed stump material may be frozen and is first conveyed first to a de-icing treatment (4), which is carried out using hot gas obtained from a later drying step (7). If a de-icing treatment is not required, the crushed stump material is conveyed directly to comminution (5), where it is given a homogenous particle-like form. The particle size to which the stumps are comminuted depends on the process to be used for continuous carbonization: retort, drum or fluidized bed. When a fluidized bed is used, comminution is made to a smaller particle size of 5 to 20 mm. A smaller particle size, as fluidized bed processing in general, reduces carbonization time due to effective transfer of material and heat.

Since there may still be mechanical impurities adhering to the crushed stump material, such as sand, the material is transported, if necessary, on a vibrating conveyor screen (6) via a gravity separator to a buffer silo. The preferred screen size through which the particle-like material is passed is 5 to 20 mm. The particle-like crushed stump material, which has a moisture content of around 30 to 50%, is conveyed from the buffer silo to the drying step (7). Drying takes place at a temperature of 100 to 200°C and after drying the moisture content of the biomass raw material is around 10 to 20%. The drying step may be carried out in a separate reactor, such as a fluidized bed reactor, containing a bed formed of the biomass raw material to be processed. Likewise, in drum kiln carbonization, drying maybe performed in a separate drum kiln, from which the dried biomass raw material is fed into the carbonization drum kiln. Of course drying may be performed in a different type of reactor than carbonization. In accordance with another alternative, the drying step is performed for instance as a pre-treatment step in connection with a shaft furnace. The energy required for drying is obtained from the circulation gases of the post-combustion boiler (9). Drying of the biomass raw material is a precondition for effective and complete carbonization.

In addition to stumps, other logging waste, peat, straw, reed canary grass, waste wood from construction or surplus grain may be used as raw material for bio-coke. In such cases, for example the crown mass is baled and stored at the roadside, the amount of impurities being reduced as the mass dries out. Likewise, after mowing, reed canary grass is raked, crushed and baled.

The dried biomass raw material with a suitable particle size is conveyed to carbonization (8), which typically takes place at a temperature of 650 to 1000°C, more typically at a temperature of 750 to 1000°C. The carbonization step may be carried out in a reactor that operates continuously as described above, such as a fluidized bed furnace, drum kiln or shaft furnace. When carbonization is carried out in a fluidized bed reactor, it is useful to use previously formed bio-coke as the bed material to prevent impurities from contaminating the bio-coke that is being generated. Additional heating equipment to be used for heating and, if necessary, for controlling the temperature is also arranged into the reactor (not shown in detail in the figure). Preheated combustion air is fed in the carbonization step and combustion takes place with an air deficit, i.e. the amount of air supplied is below the stoichiometric amount required for combustion. Therefore only a first part of the gases formed in carbonization is burned in the carbonization reactor. The majority of the energy required for carbonization is obtained when the gases and dusts formed in carbonization burn in the carbonization reactor. Additional energy is obtained by means of the additional heating equipment and by recirculating the circulation gas of the post-combustion boiler (9) to the carbonization reactor in order to maintain a sufficient temperature. The temperature of the circulation gas conveyed to carbonization is 200 to 300°C. The properties of the bio-coke formed in carbonization are affected significantly by the final carbonization temperature and the carbonization rate. When the carbonization temperature is high, as in the method according to the invention, the product strength is improved and the volatiles content is decreased. When the temperature is around 800 to 1000°C, a product is obtained in which the amount of volatiles is only about 2%. The use of a high carbonization temperature is made possible when the ash content and amount of impurities is minimized in the pre-treatment of the biomass.

The flue gases generated in the carbonization reactor contain, in addition to reducing components, carbon dioxide and water vapour, which may react with carbon at high temperatures, decreasing the yield of bio-coke. However, the proportion of loss reactions remains low because the biomass raw material engenders a lot of gas in carbonization, which prevents the wood material or biomass raw material from coming into contact with the flue gases. The temperature of a carbonization reactor equipped with direct heating can be adjusted by means of additional air or additional heating equipment.

The hot bio-coke that is formed is cooled in a cooling reactor (11) by means of a cooling agent. In indirect cooling the cooling agent may be water or air and in direct cooling an inert gas.

The impurities and ash components of the biomass raw material, including calcium, silicon, magnesium, potassium, sodium, iron, phosphorus and sulphur, are concentrated in the finer bio-coke fraction. The ash-rich finest fraction is removed from the cooled bio-coke as required by screening (12). This allows the ash content of the final product to be controlled. The bio-coke product may continue to briquetting. The first step of briquetting is grinding (13). In the next step, the ground bio-coke is mixed (14) with water and a binding agent. The strength required for the briquette application is adjusted by the quality and quantity of the binder. The binder used may be for example starch, bentonite, molasses or tar. Tar can be recovered from the gases exiting carbonization and then used as binder in briquetting. After this the mixture of bio-coke, binder and water is pressed (15) into briquettes of a desired size, which are dried (16). The compressive strength of the briquettes is the same in every direction, and not dependent on the direction of the grain as with pieces of wood coke. Strength may be acted on by the quantity and quality of the binder as well as the briquette drying temperature. The briquette size depends on the application; for instance the coke briquette size required in ferrochrome smelting is 10 to 25 mm. The bio-coke briquettes that are produced are stored.

In indirect cooling, the heated air may be used as the preheated air for the carbonization step. If water cooling is performed, the steam that is generated is conveyed to the piping of the post-combustion boiler (9).

The flue gases that contain the second part of the gaseous, liquid and solid components formed in the carbonization reactor (8) are conveyed to the post-combustion boiler (9) and burned there. The combustion temperature in the boiler is adjusted to be such that the ash components do not melt. It is advantageous to burn also poor-quality ash-rich bio-coke in the post-combustion boiler, if it is not to be made into briquettes with lower quality requirements. Likewise, it is advantageous to burn the dust generated in the drying step (7) in the post-combustion boiler. Water is fed into the circulation gas piping in the walls of the boiler and the energy produced by combustion is recovered from the piping as steam. The steam that is generated is conveyed to the power plant (10), where it is used to produce electricity and district heat. The cooled circulation gas to be removed from the boiler, which has a temperature of around 200 to 300°C, is conveyed to carbonization and drying.

To minimize all the emissions generated in bio-coke production, the wastewater generated in any de-icing (4) of the biomass raw material is also conveyed to the wastewater purification step (19). The exhaust gases formed in the de-icing step are conveyed to condenser gas scrubbing (18), where they are scrubbed with a suitable scrubbing solution. After gas scrubbing the gases may be removed from the cycle and the wastewater that is generated is conveyed to the purification step (19), after which the water cleaned of impurities may also be removed from the cycle.

### EXAMPLES

### Example 1

36.5 t/h of pre-cleaned, crushed tree stumps are conveyed to the drying area. The moisture content of the material is 40%. After the drying step the moisture content of the material is 12% and its composition is:

| | |
|---|---|
| C | 50% |
| H | 6.5% |
| O | 41.5% |
| N | 1.4% |
| S | 0.05% |
| ash | 0.55% |

The amount of dried stump material conveyed to carbonization is 25 t/h. The carbonization produces 4.5 t/h of bio-coke . The temperature of the gas exiting the carbonization step is around 900°C and its quantity is 35000 Nm³/h. The gas contains about 32 vol.% of hydrogen and about 27 vol.% of carbon monoxide. The gas from the carbonization step is conveyed to a post-combustion boiler, where it is burned and the resulting thermal energy is transferred to the water and steam circulating in the boiler pipes, which are conveyed onward for the production of electricity and district heat. The gas burned in the boiler produces 71 MWh/h of energy. The temperature of the gas removed from the boiler for circulation is around 300°C.

### Example 2

The table below presents an example comparison of the effect of temperature on bio-coke quality.

| **Carbonization temp. °C** | **C_{fix} %** | **Volatiles %** |
|---|---|---|
| 978 | 93 | 2 |
| 715 | 85 | 11 |

## Claims

1. A method for the production of particle-like bio-coke for use in reduction in the context of an environment-friendly production of ferroalloys, whereby bio-coke with sufficient strength, low ash, sulphur and phosphorus content, as well as low volatiles content, is produced continuously from biomass raw material, the method comprising the following steps:
a) lifting of tree stumps, dividing them into pieces and shaking off impurities;
b) storing and pre-drying them at the lifting site;
c) storing, pre-drying, pre-cleaning and pre-comminuting them at the roadside;
d) de-icing the stump material, comminuting it into particle-like form;
e) transporting the ground stump material by a vibrating conveyor screen to a storage silo;
f) drying the stump material;
g) carbonizing the dried stump material in a carbonization reactor, where a first part of the gases and dust formed in carbonization of the biomass raw material is burned in the carbonization reactor with an air deficit;
h) feeding a second part of the gases formed in the carbonization of the biomass raw material to a post-combustion boiler, in which they are burned and the thermal energy that is generated is utilized to produce electricity and district heat and the cooled circulation gas is conveyed to the drying and carbonization of the particle-like biomass raw material;
i) conveying the particle-like bio-coke formed in carbonization to cooling and conveying the cooling medium used either to the carbonization reactor or to the post-combustion boiler;
j) screening the cooled particle-like bio-coke formed in carbonization and conveying to briquetting, a first step of which is grinding;
k) mixing the fine particle-like bio-coke with water and a binding agent thus regulating the strength of the bio-coke;
l) pressing the bio-coke mixture into briquettes;
m) drying the briquettes.

## Patentansprüche

1. Verfahren für die Herstellung von partikelartigem Biokoks zur Anwendung in der Reduzierung im Zusammenhang einer umweltfreundlichen Herstellung von Ferrolegierungen, wobei Biokoks mit hinreichender Festigkeit, niedrigem Asche-, Schwefel- und Phosphorgehalt sowie niedrigem Gehalt flüchtiger Bestandteile kontinuierlich aus Biomasserohmaterial hergestellt wird, wobei das Verfahren die folgenden Schritte umfasst:
a) Anheben von Baumstümpfen, Unterteilen dieser in Stücke und Abschütteln von Unreinheiten;
b) Speichern und Vortrocknen dieser an der Anhebestelle;
c) Speichern, Vortrocknen, Vorreinigen und Vorzerkleinern dieser am Fahrbahnrand;
d) Enteisen des Stumpfmaterials, Zerkleinern jenes in partikelähnliche Form;
e) Transportieren des Bodenstumpfmaterials über einen vibrierendes Fördersieb zu einem Speichersilo;
f) Trocknen des Stumpfmaterials;
g) Karbonisieren des getrockneten Stumpfmaterials in einem Schwelreaktor, wo ein erster Teil des bei der Karbonisierung des Biomasserohmaterials gebildeten Gases und Staubs in dem Schwelreaktor bei Luftmangel verbrannt wird;
h) Zuführen eines zweiten Teils der bei der Karbonisierung des Biomasserohmaterials gebildeten Gase zu einem Nachverbrennungskessel, in welchem diese verbrannt werden und wobei die thermische Energie, die generiert wird, verwendet wird, um Elektrizität und Fernwärme herzustellen und wobei das gekühlte Spülgas zum Trocknen und Karbonisieren des partikelartigen Biomasserohmaterials gefördert wird;
i) Fördern des partikelartigen Biokokses, das bei der Karbonisierung gebildet wurde, zum Kühlen und Fördern des verwendeten Kühlmediums entweder zu dem Schwelreaktor oder zu dem Nachverbrennungskessel;
j) Untersuchen des gekühlten partikelartigen Biokokses, das bei der Karbonisierung gebildet wurde, und Fördern zum Brikettieren, dessen erster Schritt Mahlen ist;
k) Mischen des feinen partikelartigen Biokokses mit Wasser und einem Bindemittel, wodurch die Festigkeit des Biokokses reguliert wird;
l) Pressen der Biokoksmischung in Briketts;
m) Trocknen der Briketts.

## Revendications

1. Procédé pour la production de coke de biomasse semblable à des particules à utiliser en réduction dans le contexte d'une production de ferro-alliages ne portant pas atteinte à l'environnement, de sorte que du coke de biomasse ayant une force suffisante, une faible teneur en cendres, soufre et phosphore, aussi bien qu'une faible teneur en composants volatils, est produit de façon continue à partir de matière première de biomasse, le procédé comprenant les étapes suivantes :
a) arrachement de souches d'arbre, leur division en morceaux et enlèvement des impuretés ;
b) leur stockage et préséchage au niveau du site d'arrachement ;
c) leur stockage, préséchage, prénettoyage et prémorcellement au bord de la route ;
d) dégivrage de la matière de souche, son morcellement en une forme semblable à des particules ;
e) transport de la matière de souche broyée par un crible de convoyeur vibrant jusqu'à un silo de stockage ;
f) séchage de la matière de souche ;
g) carbonisation de la matière de souche séchée dans un réacteur de carbonisation, où une première partie des gaz et de la poussière formés dans la carbonisation de la matière première de biomasse est brûlée dans le réacteur de carbonisation avec un déficit d'air ;
h) amenée d'une seconde partie des gaz formés dans la carbonisation de la matière première de biomasse jusqu'à une chaudière de postcombustion, dans laquelle ils sont brûlés et l'énergie thermique qui est engendrée est utilisée pour produire de l'électricité et de la chaleur centralisée et le gaz de circulation refroidi est transporté jusqu'au séchage et la carbonisation de la matière première de biomasse semblable à des particules ;
i) transport du coke de biomasse semblable à des particules formé lors de la carbonisation jusqu'au refroidissement et transport du milieu de refroidissement utilisé soit jusqu'au réacteur de carbonisation soit jusqu'à la chaudière de postcombustion ;
j) criblage du coke de biomasse semblable à des particules refroidi formé lors de la carbonisation et transport jusqu'au briquetage, dont une première étape est le broyage ;
k) mélange du coke de biomasse semblable à des particules fines avec de l'eau et un agent de liaison régulant ainsi la force du coke de biomasse ;
l) pressage du mélange de coke de biomasse en briquettes ;
m) séchage des briquettes.
